# EUROPÄISCHE PATENTANMELDUNG

(11) **EP 3 896 107 A1**
(43) Veröffentlichungstag der Anmeldung: **20.10.2021**
(21) Anmeldenummer: 21167351.2
(22) Anmeldetag: 08.04.2021
(51) Int. Cl.: C08G 8/22, C08G 8/28

(54) **HYDROPHOBE SÄURE- UND BASENRESISTENTE GELE DURCH SILYLIERUNG ERHÄLTLICH**

(30) Priorität: 15.04.2020 DE 102020110322
(71) Anmelder: Deutsches Zentrum für Luft- und Raumfahrt e.V., 53227 Bonn (DE)
(72) Erfinder: TANNERT, René, 53902 Bad Münstereifel (DE); HENN, Fabian Alexander, 53347 Alfter (DE)
(74) Vertreter: dompatent von Kreisler Selting Werner - Partnerschaft von Patent- und Rechtsanwälten mbB

(57) **Zusammenfassung**

Gegenstand der Erfindung ist die Herstellung hydrophober und säure- und baseresistenter Gele durch Silylierung einer Alkoholfunktionalität, insbesondere durch Einsatz sterisch und elektronisch modifizierter, zum Teil aktivierter, Silylreagenzien mit externen Basen, welche in einer langanhaltenden Hydrophobierung der Gele mit Alkoholfunktionalität, insbesondere Aerogele und Xerogele resultiert.

## Beschreibung

Gegenstand der Erfindung ist die Herstellung hydrophober und säure- und baseresistenter Gele durch Silylierung einer Alkoholfunktionalität, insbesondere durch Einsatz sterisch und elektronisch modifizierter, zum Teil aktivierter, Silylreagenzien mit externen Basen, welche in einer langanhaltenden Hydrophobierung der Gele mit Alkoholfunktionalität, insbesondere Aerogele und Xerogele resultiert.

### Begriffsdefinitionen:

a) Gel: Ein Gel ist gemäß Definition G02600 der "International Union of Pure and Applied Chemistry (IUPAC)" ein kolloidales nicht-fluides oder polymeres Netzwerk, welches über sein gesamtes Volumen von einem Fluid expandiert wird.
b) Aerogel: Ein Aerogel ist gemäß Definition A00173 der "International Union of Pure and Applied Chemistry (IUPAC)" ein mikroporöses Gel, dessen fluide Phase aus Luft besteht. Über diese Beschreibung hinaus sei im Kontext dieser Patentanmeldung definiert, dass ein Aerogel durch ein Trocknungsprozess mit einem überkritischen Fluid hergestellt wird.
c) Xerogel: Ein Xerogel ist gemäß Definition X06700 der "International Union of Pure and Applied Chemistry (IUPAC)" ein offenes Netzwerk, das durch die Entfernung schwellender Agentien aus einem Gel hergestellt wird. Über diese Beschreibung hinaus sei im Kontext dieser Patentanmeldung definiert, dass ein Xerogel durch ein Trocknungsprozess bei Umgebungsdruck hergestellt wird.
d) Alkoholfunktionalität: Mit Alkohoholfunktionalität ist die Hydroxyleinheit (-OH) gemeint.
e) Basen: Mit Basen sind gemäß der Lewis-Nomenklatur Elektronenpaardonoren gemeint.
f) langanhaltende Hydrophobierung: Mit langanhaltender Hydrophobierung ist die Erreichung einer wasserabweisenden Wirkung (Kontaktwinkel> 90°) über einen Zeitraum von mindestens einem Monat bei Umgebungstemperatur (22 °C) gemeint.
g) Säureresistenz: Mit Säureresistenz ist die Inertheit gegenüber hydrolytischer Spaltung im sauren Milieu (pH<7) gemeint.
h) Baseresistenz: Mit Baseresistenz ist die Inertheit gegenüber hydrolytischer Spaltung im alkalischen Milieu (pH>7) gemeint.
i) sterisch und elektronisch modifiziertes Silylierungsreagenz: Mit sterisch modifizierten Silylierungsreagenzien sind solche Reagenzien gemeint, welche anstelle der üblichen primären Alkylreste auch sekundäre oder tertiäre Alkylreste beinhalten. Mit elektronisch modifizierten Silylreagenzien sind Reagenzien wie Silyltrifluormethansulfonate gemeint, welche im Gegensatz zu den üblichen Silylchloriden oder Silazanen nicht oder nur sehr schwach koordinierende Anionen beinhalten oder *in situ* erzeugen.

### O-Funktionalisierung von Phenolen in Lösung und an fester Phase

Molekulare Reaktionen von Phenolen und seinen Derivaten einschließlich Resorcinol sind in der Literatur beschrieben. Beispiele schließen *O*-Alkylierungen von Phenolaten mit Halogenalkanen (A. W. Williamson, Justus Liebigs Annalen der Chemie 1851, 77, 37-49), Alkyltosylaten (F. Drahowzal, D. Klamann, Monatshefte für Chemie und verwandte Teile anderer Wissenschaften 1951, 82, 452-459), Alkylsulfaten (M. Pailer, P. Bergthaller, Monatshefte für Chemie - Chemical Monthly 1968, 99, 103-111) ein. *O*-Acylierungen sind mit Säurechloriden (C. Schotten, Berichte der deutschen chemischen Gesellschaft 1884, 17, 2544-2547; E. Baumann, Berichte der deutschen chemischen Gesellschaft 1886, 19, 3218-3222), -anhydriden (A. Einhorn, F. Hollandt, Justus Liebigs Annalen der Chemie 1898, 301, 95-115), Phosphoniumsalze (S. Bittner, Y. Assaf, Chemistry & Industry 1975, 281-281; O. Mitsunobu, Synthesis 1981, 1981, 1-28; M. S. Manhas, W. H. Hoffman, B. Lal, A. K. Bose, Journal of the Chemical Society, Perkin Transactions 1 1975, 461-463) oder O-Acylharnstoffderivaten (B. Neises, W. Steglich, Angew. Chem. 1978, 90, 556-557) beschrieben. Ferner wurden O-Silylierungen mit unterschiedlichsten alkyl- und aryl-substituierten Silylchloriden und -trifluormethansulfonaten beschrieben (P. J. Kocieński, Protecting Groups, 3rd Edition ed., Georg Thieme Verlag, Stuttgart, New York, 2005; R. F. Cunico, L. Bedell, The Journal of Organic Chemistry 1980, 45, 4797-4798). Je nach elektronischen und sterischen Eigenschaften sind silylierte Alkohole unterschiedlich inert gegenüber Säuren und Basen. Man geht davon aus, dass sich sowohl die sauer katalysierte als auch die basische katalysierte Hydrolyse der Silyletherfunktion beim Austausch einer Trimethylsilylgruppe durch sterisch anspruchsvollere und/ oder elektronisch optimierte Substituenten signifikant verlangsamt (siehe Tabelle 1) (P. J. Kocieński, Protecting Groups, 3rd Edition ed., Georg Thieme Verlag, Stuttgart, New York, 2005).

**Tabelle 1:**

| Relative Stabilitäten verschiedener Silylether gegenüber Hydrolyse | | |
|---|---|---|
| Silylfunktionalisierung | kᵣₑₗ (sauer katalysiert) | kᵣₑₗ (basisch katalysiert) |
| Trimethyl- | 1 | 1 |
| Triethyl- | 64 | 10-100 |
| *tert*.-Butyldimethyl- | 20.000 | 20.000 |
| Triisopropyl- | 700.000 | 100.000 |
| *tert*.-Butyldiphenyl- | 5.000.000 | 20.000 |

Für Cresole wurden die Halbwertstabilitäten verschiedener Silylcresolether gemessenen (siehe Tabelle 2). Auch hier wurde eine signifikante Verlangsamung der Silyletherhydrolyse deutlich (J. S. Davies, C. L. Higginbotham, E. J. Tremeer, C. Brown, R. C. Treadgold, Journal of the Chemical Society, Perkin Transactions 1 1992, 3043-3048).

**Tabelle 2: Halbwertstabilitäten verschiedener silylierter Cresole gegenüber Hydrolyse**

| Silylfunktionalisierung | 1% HCl in 95% MeOH (= sauer katalysiert) | 5% NaOH in 95% MeOH (= (basisch katalysiert) |
|---|---|---|
| Trimethyl- | nicht bestimmt | nicht bestimmt |
| Triethyl- | ≤ 1 min | ≤ 1 min |
| *sec*.-Butyldimethyl- | ≤ 1 min | ≤ 1 min |
| *tert*.-Butyldimethyl- | 273 min | 3,5 min |
| *tert*.-Butyldiphenyl- | 100 h | 6,5 min |
| Triisopropyl- | 100 h | 188 min |

Der erhöhten Inertheit der Silyletherprodukte steht eine verringerte Reaktivität der Ausgangsstoffe entgegen: So kann eine Trimethylsilylierung in Lösung oder in der Gasphase, mit oder ohne Basenzusatz und in unaktivierter Form (als Silylchlorid) eingesetzt werden, während sterisch anspruchsvollere Silylreagenzien wegen ihres hohen Siedepunktes nur in Lösung, zudem nur unter Zusatz geeigneter Basen und häufig auch nur in aktivierter Form (z.B. als Trifluormethylsulfonat) effizient eingesetzt werden können (P. J. Kocieński, Protecting Groups, 3rd Edition ed., Georg Thieme Verlag, Stuttgart, New York, 2005).

In geringerem Maße ist Literatur zu *O*-Funktionalisierung (einschließlich Alkylierung, Acylierung, Silylierung) von phenolhaltigen Polymeren in Festphasensynthesen erschienen. Diese beschränkt sich vor allem auf die Funktionalisierung von des Biopolymers Lignin, und hier insbesondere auf Carbamatbildung (zu Polyurethanverbindungen) (A. Duval, M. Lawoko, Reactive and Functional Polymers 2014, 85, 78-96; S. Laurichesse, L. Averous, Prog. Polym. Sci. 2014, 39, 1266-1290; M. Alinejad, C. Henry, S. Nikafshar, A. Gondaliya, S. Bagheri, N. Chen, S. K. Singh, D. B. Hodge, M. Nejad, Polymers 2019, 11, 1202).

Hinsichtlich einer *O*-Funktionalisierung von monolithischen Polymeren wurden verschiedene Geometrien beschrieben: neben Blättern (M. Lebl, Peptide Science 1998, 47, 397-404), Nadeln (N. J. Maeji, R. M. Valerio, A. M. Bray, R. A. Campbell, H. M. Geysen, Reactive Polymers 1994, 22, 203-212) und Scheiben (N. Hird, I. Hughes, D. Hunter, M. G. J. T. Morrison, D. C. Sherrington, L. Stevenson, Tetrahedron 1999, 55, 9575-9584) im wurden auch Kugeln, insbesondere für kreuzvernetzte Polystyrolträger, beschrieben. Diese monolithischen Körper wurden allerdings nur für sehr kleine Dimensionen bis zu Durchmessern im Millimeterbereich beschrieben (F. Z. Dörwald, Organic Synthesis on Solid-Phase 2nd ed., Wiley-VCH Verlag GmbH, Weinheim, 2002).

### Funktionalisierungen monolithischer phenolischer Polymere

In US6288132B1 wurde die postsynthetische Silylierung von nanoporösen Resorcin-Formaldehyd-Gelen beschrieben. Verwendet wurden Alkylsilylhalogenide, Silazane und Bis(trialkylsilyl)acetamide ohne Zusatz externer Basen. Als mögliche Silylreagenzien wurden auch Alkylsilylreagenzien wie Triethylsilylchlorid und Dimethylphenylsilylchlorid beschrieben; deren Kombination mit Basen wurde hierbei nicht erwähnt. Die eingesetzten Silylierungsreagenzien weisen überwiegend sterisch anspruchslose primäre Alkylgruppen oder reduktiv wirkende Hydrosilangruppen (Si-H) auf.

Über hydrophobe Eigenschaften der Materialien wurde in dieser Schrift nicht berichtet. Die beschriebenen Verfahren führen in einigen Fällen zu silylierten Pulvern, also zum Verlust der Gelstruktur. Hier wurden weder chemische (Langzeit-)Stabilität noch hydrophobe Effekte gezeigt.

Arenillas und Mitarbeiter beschrieben die Funktionalisierung von Resorcin-Formaldehyd-Xerogel-Pulvern mit Trimethylsilylgruppen. Dazu wurde als Reagenz entweder Hexamethyldisilazan oder Trimethylsilylchlorid, jeweils ohne Zusatz externer Basen, verwendet. Die resultierenden Gele waren allerdings nur wenige Tage hydrophob, und das Verfahren wurde nur für Pulver durchgeführt, nicht jedoch an Monolithen.

### Alternative Herstellung alkylierter poröser phenolischer Polymere

US 7291653B2 von Baumann, Satcher und Gash beschreibt die Herstellung hydrophober Resorcin-Formaldehyd-Analoga durch den Einsatz alkylierter (methylierter) Resorcin-Monomere (T. F. Baumann, J. H. Satcher, A. E. Gash, Preparation of hydrophobic organic aerogels, The Regents of the University of California, Oakland, CA, U.S.A., 2007).

Gegenwärtig ist die Beständigkeit der hydrophoben Modifikationen begrenzt: TMS-Gruppen hydrolysieren schnell (in Stunden bis Tagen). Die beschriebene Bandbreite untersuchter Silylmodifikationen ist klein (vorrangig Trimethylsilyl- und andere Trialkylsilyl-Substituenten).

Der Stand der Technik beinhaltet die Verwendung unaktivierter Trimethylsilyldonoren (wie Trimethylsilylchlorid oder Hexamethyldisilazan) ohne Verwendung externer Basen zur Herstellung kurzzeitig hydrophober Xerogele.

Die Aufgabe der vorliegenden Erfindung besteht somit in der Bereitstellung langanhaltend hydrophober Gele, insbesondere Aerogele und Xerogele mit Alkoholfunktionalität.

Die vorliegende Aufgabe wird erfindungsgemäß gelöst durch ein Verfahren zur Herstellung langanhaltend hydrophober Gele, dadurch gekennzeichnet, dass man Gele mit Alkoholfunktionalität umsetzt mit sterisch und/oder elektronisch modifizierten, gegebenenfalls aktivierten Silylierungsreagenzien und einer Base zur Erhöhung der Nukleophilie und damit der Reaktivität der Alkoholfunktionalität. Die Base dient außerdem der Entfernung der aus Hydroxylfunktion und Gegenion des Silylierungsreagenzes entstehenden Säure, im Falle von Aminbasen als Ammoniumsalz, welches durch Waschprozesse mit polaren Lösemitteln (wie DMF, NMP) entfernt werden kann.

Besonders bevorzugt im Sinne der vorliegenden Erfindung werden sowohl Silylierungsreagenzien wie auch Base im Überschuss zur Anzahl der Hydroxylgruppen des Gels, einschließlich des im Gel vorhandenen Lösemittels eingesetzt, um einen vollständigen Umsatz der Hydroxylgruppen zu ermöglichen, wobei die Base in mindestens äquimolarem Verhältnis zum Silylierungsreagenz zugegeben wird. Die Zugabe eines molaren Überschusses an Silylierungsreagenz und Base ist für den maximalen Umsatz der Silylierungsreaktion maßgeblich. Besonders bevorzugt im Sinne der vorliegenden Erfindung werden sowohl Silylierungsreagenzien wie als auch Base in einem überstöchiometrischen Verhältnis eingesetzt, um durch höhere Reaktandenkonzentrationen auch schnellere Reaktionszeiten und damit kürzere Prozessdauern zu erreichen, wobei die oberen Grenzen des Reagenzieneinsatzes durch die Löslichkeit der Reagenzien und deren wirtschaftlichen Einsatz gegeben sind.

Eine weitere Ausführungsform der Erfindung ist dadurch gekennzeichnet, dass man bei einem Wassergehalt des Lösemittels im Gel von weniger als 0,1 Gew.-% ein Stoffmengenverhältnis von Gelhydroxylgruppen zu Silylierungsreagenzien zu Base von 1: 1,2 : 1,4 bis 1: 5: 10, idealerweise 1:2:4. In diesem Bereich der Reaktandenzusammensetzungen wird einerseits eine gesteigerte Reaktionsgeschwindigkeit durch erhöhte Reaktandenkonzentration erreicht, andererseits werden wirtschaftliche Gegebenheiten, insbesondere hinsichtlich des Einsatzes der Silylierungsreagenzien, berücksichtigt.

Vorzugsweise setzt man bei Wassergehalten des Lösemittels im Gel von mehr als 0,1 Gew.-% eine der Wassermenge entsprechende Stoffmenge an Silylierungsreagenzien sowie mindestens dieselbe Stoffmenge an Base zusätzlich ein. Hierdurch wird der Tatsache Rechnung getragen, dass Wasser die Hydrolyse der Silylierungsreagenzien bewirkt, welche dann nicht mehr für die gewünschte Silylierung der Alkoholfunktion zur Verfügung stehen. Die zusätzliche Gabe von Silylierungsreagenz und Base in gleicher Menge zum Wassergehalt des Lösemittels bewirkt somit ein konstantes Stoffmengenverhältnis von Alkohol zu reaktivem Silylierungsreagenz und freier Base.

Vorzugsweise sind die Silylierungsreagenzien dreifach mit Alkyl- und/oder Arylgruppen substituiert. Vorzugsweise enthalten die Silylierungsreagenzien keine Si-H Gruppen. Die sterisch modifizierten Silylierungsreagenzien sind mit wenigstens einer sekundären oder tertiären Alkylgruppe substituiert. Vorzugsweise sind die sterisch modifizierten Silylierungsreagenzien dreifach mit sekundären Alkylgruppen, tertiären Alkylgruppen und/oder Arylgruppen substituiert.

Besonders bevorzugt ist eine Ausführungsform der Erfindung, wenn die sterisch modifizierten Silylierungsreagenzien sekundäre und/oder tertiäre Alkyl- und/oder Arylreste mit 5 bis 24 C-Atomen umfassen welche gegebenenfalls substituiert sein können. Vorzugsweise sind die Silylierungsreagenzien dreifach mit sekundären Alkylresten, tertiären Alkylresten und/oder Arylresten mit 5 bis 24 C-Atomen substituiert. Die resultierenden silylierten Gele sind mit steigendem Substitutionsgrad und sterischem Anspruch zunehmend inert gegenüber sauer oder basisch katalysierter Hydrolyse.

Die Silylierungsreagenzien werden insbesondere ausgewählt aus *tert*.-Butyldi-methylsilylchlorid, *tert*.-Butyldimethylsilyltrifluormethansulfonat, *tert.-*Butyldiphenylsilylchlorid, tert.-Butyldiphenylsilyltrifluormethansulfonat, Triisopropylsilylchlorid und/oder Triisopropylsilyltrifluormethansulfonat, *N,N-*Bis(triisopropylsilyl)trifluoromethansulfonamid, Tris(trimethylsilyl)silylchlorid, Tris(triethylsilyl)silylchlorid, Tris(trimethylsilyl)silyltrifluoromethansulfonamid und/oder *N*,*N*-Bis[tris(trimethylsilyl)silyl](trifluoromethansulfonamid. Diese Reagenzien zeichnen sich durch hohen sterischen Anspruch aus, sodass sie im Vergleich zu Trimethylsilylreagenzien inerter gegenüber sauer oder basisch katalysierter Hydrolyse sind. Die in der Auswahl genannten Silyltrifluormethansulfonate und *N*,*N*-Bis(silyl)trifluoromethansulfonamide zeichnen sich zusätzlich durch erhöhte chemische Reaktivität aufgrund von elektronischer Aktivierung aus.

Die elektronisch modifizierten Silylierungsreagenzien umfassen insbesondere Silyltrifluormethansulfonate und/oder *N*,*N*-Bis(silyl)trifluoromethansulfonamide. Solche Reagenzien zeichnen sich durch schwach koordinierende Anionen aus, wodurch ein Angriff von Nukleophilen an die Silylreste begünstigt wird.

In einer weiteren bevorzugten Ausführungsform der Erfindung sind die Ausgangsgele ausgewählt aus Monolithen, Filmen und/ oder Pulvern mit Sauerstoff-tragenden Gruppen, insbesondere Alkoholen zur Bildung von Silylethern, Aldehyden und Ketonen zur Bildung von Silylenolethern, dabei vorwiegend Alkohole, Aldehyde und Ketone mit aromatischen Gruppen, also Phenole, Cresole, Resorcinole, Benzaldehyde, Phenone und/ oder Diarylketone. Mithilfe der beschriebenen Methode können daher Gele unabhängig von ihrer makroskopischen Gestalt (Pulver, Monolith, Film) an den genannten funktionellen Gruppen silyliert werden.

Vorzugsweise wird das Stoffmengenverhältnis von Ausgangsgel zu Silylierungsreagenzien im Bereich von 1 bis 0,5 eingestellt, um einen Kompromiss aus durch Überschuss an Silylierungsreagenz resultierender Umsatzsteigerung und durch erhöhten Reagenzeinsatz entstehenden Kosten zu erreichen.

In gleicher Weise wie vorstehend wird das Stoffmengenverhältnis von Ausgangsgel zu Base vorzugsweise im Bereich von 1 bis 0,25 eingestellt ist, um einen Kompromiss aus durch Überschuss an Base resultierender Umsatzsteigerung und durch erhöhten Reagenzeinsatz entstehenden Kosten zu erreichen.

In einer weiteren bevorzugten Ausführungsform der Erfindung sind die Basen ausgewählt aus aromatischen und aliphatischen Stickstoffbasen, insbesondere Imidazole, davon bevorzugt 1*H*-Imidazol, Pyridine, davon bevorzugt Lutidin und Dimethylaminopyridin, Trialkylamine, davon bevorzugt Trimethylamin, Triethylamin und Diisopropylethylamin (Hünig's Base), zyklische Amine, insbesondere Piperidin und Tetramethylpiperidin, da diese über die geeignete Basizität zur Deprotonierung von Alkoholen, Aldehyden, Ketonen verfügen.

Die Verwendung von Diisopropylethylamin (Hünig's Base), zyklischen Aminen, insbesondere Piperidin und Tetramethylpiperidin hat darüber hinaus den Vorteil, dass durch erhöhten sterischen Anspruch die Nukleophilie der Basen herabgesetzt ist, ohne deren Basizität zu verringern, sodass mit diese mit elektronisch aktivierten Silylierungsreagenzien verwendet werden können, ohne deren Reaktivität zu beeinträchtigen.

Eine weitere Ausführungsform der vorliegenden Erfindung besteht in langanhaltenden hydrophoben Gelen, die nach dem vorstehenden Verfahren erhältlich sind.

Die Verwendung der vorstehend definierten Gele eignen sich für industrielle Dichtungen, Verkleidung von Rohrleitungen, magensaftresistente Arzneimittelträger oder Sonde, Dämm-Material, das insbesondere der Witterung/Spritzwasser ausgesetzt ist.

Diese Erfindung beinhaltet insbesondere die Verwendung sterisch und elektronisch modifizierter, zum Teil aktivierter, Silylreagenzien mit externen Basen, welche in einer langanhaltenden Hydrophobierung der Gele, insbesondere Xerogele resultiert.

Die Verwendung der besonders säure- und basen-resistenten Silylgruppen (Triisopropylsilyl-, tert.-Butyldimethyl und tert.-Butyldiphenyl) wurde noch nicht berichtet.

Die Erfindung ist insbesondere neben Aerogelen und Xerogelen auch auf andere (poröse und nicht-poröse) Festkörper mit Alkoholfunktionalität anwendbar.

Beispielhafte Anwendungen, bei denen Hydrophobizität und/oder Säure-/Base-Stabilität erforderlich ist, umfassen:
- Industrielle Dichtungen, Verkleidung von Rohrleitungen,
- Magensaftresistente Arzneimittelträger oder Sonden
- Spezielle Dämm-Materialien, die der Witterung/ Spritzwasser ausgesetzt sind (beispielsweise für Gebäude, Fahrzeuge, Flugzeuge)

### Ausführungsbeispiele

Für die Synthese von Resorcin-Formaldehyd (RF)-Xerogelen wurden als Ausgansstoffe Resorcinol (R), Formaldehyd (F), deionisiertes Wasser (W) und Natriumcarbonat (C) verwendet. Es wurden folgende Stoffmengenverhältnisse gewählt: R/W= 0,044; R/F=0,74 und R/C=1500. Die folgenden Mengenangaben beziehen sich auf einen einzelnen Monolith. Typische Ansätze beinhalten die Herstellung von 1-50 Gelmonolithe.

Zunächst wurde Resorcinol (3 g, 0,027 mol) in deionisiertem Wasser (7,67 mL, 0,0012 mol durch Rühren mit Kreuzrührfisch (ca. 5-10 min bei 250 rpm) bei 22 °C gelöst. Eine 24 %ige Formaldehyd-Lösung (4,35 mL, 0,037 mol) wurde hinzugegeben und für weitere 5 min gerührt. Wasserfreies Natriumcarbonat (1,93 mg, 0, 018 mmol) wurde in einer Portion zur Lösung gegeben. Die resultierende Suspension wurde weitere 5 Minuten gerührt. Danach wurde die farblose Lösung mit Salpetersäure (32%, 2 N) auf einen pH-Wert von 5,4-5,6 angesäuert.

Anschließend wurde der Ansatz für 60 Minuten bei 22 °C gerührt und in zylindrische Becher (Durchmesser: 30 mm) aus Polypropylen überführt. Danach ließ man die Proben für 2 Tage lang bei 80 °C im Trockenschrank gelieren und altern. Während dieses Prozesses erhielten die Proben eine rötliche Farbe. Nach dem Alterungsvorgang im Ofen wurden die Proben aus den Bechern entnommen und anschließend mit DMF bzw. NMP (4 x 20 mL) und Molekularsieb (3 Ä, 0,3 nm) über einen Zeitraum von 2 Tagen gewaschen. Der Wassergehalt wurde durch (coulometrische) Karl-Fischer-Titration ermittelt. Bei einem Wassergehalt der Proben von ca. 0,1 Gew. % wurden die Gele für die folgende Silylierung verwendet.

In einem 100 mL-Becherglas wurde Imidazol (13,6 g, 0,200 mol) abgewogen und in DMF, NMP oder THF (22,5 mL) durch Behandlung mit Ultraschall (5 min bei 22 °C) gelöst. Anschließend wurden die Aerogel-Stücke in Bechern aus Polypropylen vorgelegt und die Imidazol-Lösung dazugegeben. Während das feste Silylierungsreagenz tert.-Butyldimethylsilylchlorid (TBSCI) (15 g, 0,10 mol) an der Luft abgewogen wurde, wurden die flüssigen und feuchtigkeitsempfindlicheren Reagenzien *tert*.-Butyldiphenylsilylchlorid (TBDPSCI) (25,64 mL, 0,1 mol) und Triisopropylsilyltrifluormethansulfonat (TIPSOTf) (26,88 mL, 0,1 mol) unter Argonatmosphäre überführt.

Alle Silylierungsreagenzien wurden in mehreren Portionen zu den Aerogel-Proben gegeben und die Becher offen für 24 Stunden unter einem Abzug stehen gelassen. Danach wurden die Proben zur Entfernung restlicher Silylierungsreagenzien zunächst in NMP/DMF (4x) und anschließend in Aceton (4x) gewaschen und im Abzug trocknen gelassen. Form und Farbe zeigten keine Veränderungen gegenüber nicht-behandelten RF-Gelen; allerdings zeigte sich auf der Oberfläche stellenweise ein glänzender Film.

Die hydrophoben Eigenschaften der modifizierten Xerogele wurden direkt nach der Synthese sowie neun Monate später durch Messung von Kontaktwinkeln untersucht. Die Messungen wurden dabei sowohl statisch (manuelle Tropfenkonturanalyse) als auch dynamisch (Bestimmung der Fortschreitwinkel) an mechanisch unbehandelten Monolithaußenflächen ("Monolithäußeres") und geschliffenen Monolithflächen ("Monolithinneres") der Gele durchgeführt.

Für die statische Kontaktwinkelmessung wurde ein Wassertropfen auf der (hydrophoben) Festkörperoberfläche des Gelmonolithen abgelegt. Zur Ermittlung des Fortschreitwinkels wurde der abgelegte Wassertropfen mit Hilfe einer Kanüle vergrößert. Mit einer Kamera wurden in einem Abstand von 25 cm zum Monolithen Bilder mit 3,5-facher Vergrößerung aufgenommen und mit einer Bildbearbeitungs-Software dahingehend bearbeitet, dass der Winkel zwischen Tangente am Tropfen und der Monolithoberfläche als Kontaktwinkel bestimmt wurde.

Dynamische Kontaktwinkelmessungen an hydrophobierten Aerogelproben wurden mit einem Tensiometer nach der Wilhelmy-Plattenmethode durchgeführt, wobei anstelle der Platten zylindrische Gelmonolithe geprüft wurden. Als Referenz-Flüssigkeit wurde deionisiertes Wasser verwendet.

Die Ergebnisse sind in der folgenden Tabelle dargestellt:

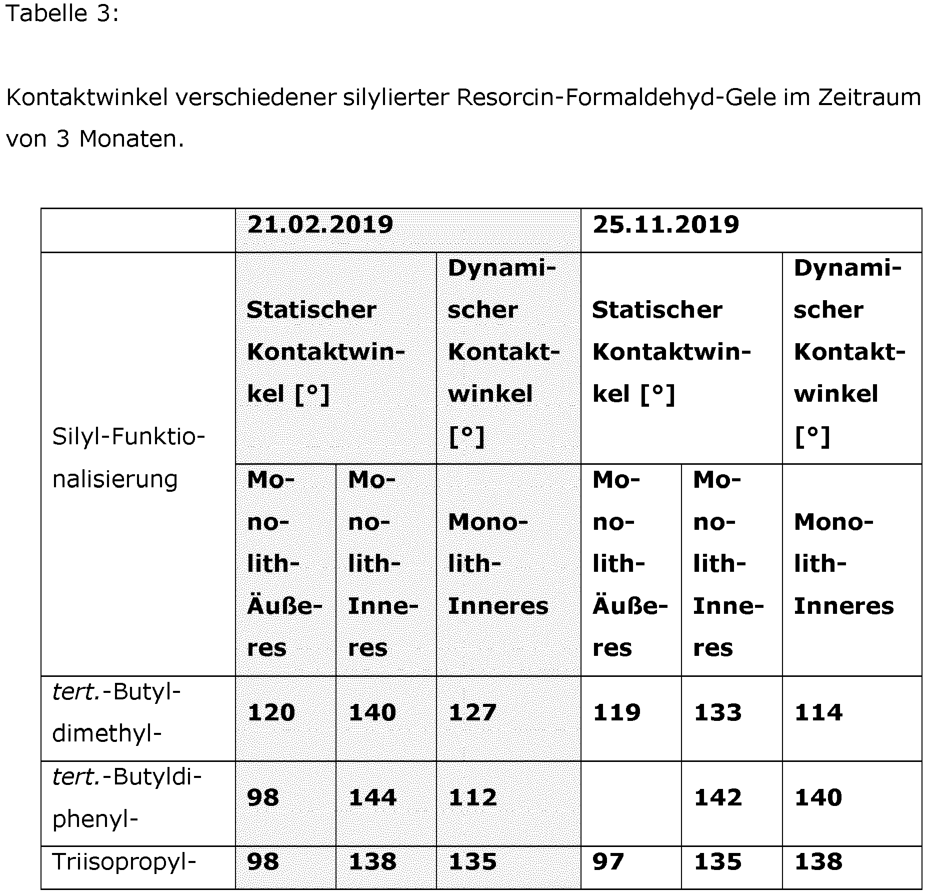

## Patentansprüche

1. Verfahren zur Herstellung langanhaltend hydrophober fester Gele, **dadurch gekennzeichnet, dass** man Gele mit Alkoholfunktionalität umsetzt mit sterisch und/oder elektronisch modifizierten, gegebenenfalls aktivierten Silylierungsreagenzien und einer Base.

2. Verfahren nach Anspruch 1, **dadurch gekennzeichnet, dass** man sowohl Silylierungsreagenzien wie auch Base im Überschuss zur Anzahl der Hydroxylgruppen des Gels, einschließlich des im Gel vorhandenen Lösemittels einsetzt, wobei die Base in mindestens äquimolarem Verhältnis zum Silylierungsreagenz zugegeben wird.

3. Verfahren nach Anspruch 1 oder 2, **dadurch gekennzeichnet, dass** man bei einem Wassergehalt des Lösemittels im Gel von weniger als 0,1 Gew.-% ein Stoffmengenverhältnis von Gelhydroxylgruppen zu Silylierungsreagenzien zu Base von 1: 1,2 : 1,4 bis 1: 5: 10, idealerweise 1:2:4, verwendet.

4. Verfahren nach einem der Ansprüche 1 bis 3, **dadurch gekennzeichnet, dass** man bei Wassergehalten des Lösemittels im Gel von mehr als 0,1 Gew.-% eine der Wassermenge entsprechende Stoffmenge an Silylierungsreagenzien sowie mindestens dieselbe Stoffmenge an Base zusätzlich einsetzt.

5. Verfahren nach einem der Ansprüche 1 bis 4, **dadurch gekennzeichnet, dass** die sterisch modifizierten Silylierungsreagenzien sekundäre und/oder tertiäre Alkyl- und/oder Arylreste, welche gegebenenfalls substituiert sein können, mit 5 bis 24 C-Atomen umfassen.

6. Verfahren nach Anspruch 5, **dadurch gekennzeichnet, dass** die Silylierungsreagenzien ausgewählt sind aus *tert*.-Butyldimethylsilylchlorid, *tert.-*Butyldimethylsilyltrifluormethansulfonat, *tert*.-Butyldiphenylsilylchlorid, *tert.-*Butyldiphenylsilyltrifluormethansulfonat, Triisopropylsilylchlorid und/oder Triisopropylsilyltrifluormethansulfonat, *N,N*-Bis(triisopropylsilyl)trifluoromethansulfonamid, Tris(trimethylsilyl)silylchlorid, Tris(triethylsilyl)silylchlorid, Tris(trimethylsilyl)silyltrifluoromethansulfonamid und/oder *N,N*-Bis[tris(trimethylsilyl)silyl](trifluoromethansulfonamid.

7. Verfahren nach Anspruch 1, **dadurch gekennzeichnet, dass** die elektronisch modifizierten Silylierungsreagenzien Silyltrifluormethansulfonate und/oder *N,N*-Bis(silyl)trifluoromethansulfonamide umfassen.

8. Verfahren nach einem der Ansprüche 1 bis 7, **dadurch gekennzeichnet, dass** die Basen ausgewählt sind aus aromatischen und aliphatischen Stickstoffbasen, insbesondere Imidazolen, davon bevorzugt 1*H*-Imidazol, Pyridine, davon bevorzugt Lutidin und Dimethylaminopyridin, Trialkylaminen, davon bevorzugt Trimethylamin, Triethylamin und Diisopropylethylamin (Hünig's Base) sowie zyklischen Aminen, insbesondere Piperidin und Tetramethylpiperidin.

9. Verfahren nach einem der Ansprüche 1 bis 8, **dadurch gekennzeichnet, dass** die Ausgangsgele ausgewählt sind aus Monolithen, Filmen und/ oder Pulvern mit Sauerstoff-tragenden Gruppen, insbesondere Alkoholen zur Bildung von Silylethern, Aldehyden und Ketonen zur Bildung von Silylenolethern, dabei vorwiegend Alkohole, Aldehyde und Ketone mit aromatischen Gruppen, also Phenole, Cresole, Resorcinole, Benzaldehyde, Phenone und/ oder Diarylketone.

10. Verfahren nach einem der Ansprüche 1 bis 9, **dadurch gekennzeichnet, dass** das Stoffmengenverhältnis von Ausgangsgel zu Silylierungsreagenzien im Bereich von 1 bis 0,5 eingestellt ist.

11. Verfahren nach einem der Ansprüche 1 bis 10, **dadurch gekennzeichnet, dass** das Stoffmengenverhältnis von Ausgangsgel zu Base im Bereich von 1 bis 0,25 eingestellt ist.

12. Langanhaltend hydrophobe Gele erhältlich nach einem Verfahren gemäß einem der Ansprüche 1 bis 11.

13. Verwendung der Gele nach Anspruch 12 als industrielle Dichtungen, Verkleidung von Rohrleitungen, magensaftresistente Arzneimittelträger oder Sonde, Dämm-Material, das insbesondere der Witterung/ Spritzwasser ausgesetzt ist.
